# FASCICULE DE BREVET EUROPEEN

(11) **EP 2 047 144 B1**
(45) Date de publication et mention de la délivrance du brevet: **25.11.2009**
(21) Numéro de dépôt: 07823539.7
(22) Date de dépôt: 03.07.2007
(51) Int. Cl.: F16H 59/70

(54) **PROCEDE DE DETERMINATION DE L'ETAT DE POINT MORT D'UNE BOITE DE VITESSES DE VEHICULE AUTOMOBILE**
VERFAHREN ZUR BESTIMMUNG DES TOTPUNKTSTATUS EINES KRAFTFAHRZEUGGETRIEBES
METHOD FOR DETERMINING THE DEAD CENTER STATE OF A MOTOR VEHICLE TRANSMISSION

(30) Priorité: 31.07.2006 FR 0653218
(43) Date de publication de la demande: 15.04.2009
(73) Titulaire: Peugeot Citroën Automobiles S.A., 78140 Vélizy Villacoublay (FR)
(72) Inventeur: SIEGFRIED, Adrien, 92250 La Garenne Colombes (FR); CALMELS, David, 78300 Poissy (FR); CELISSE, Arnaud, 92400 Courbevoie (FR)
(86) Numéro de dépôt international: PCT/FR2007/051583
(87) Numéro de publication internationale: WO 2008/015351

(56) Documents cités:
- EP-A1- 1 350 991
- EP-A2- 1 057 686
- DE-U1- 9 116 855

## Description

L'invention concerne un procédé de détermination de l'état d'une boîte de vitesses de véhicule automobile manuelle ou pilotée. Elle vise à améliorer la précision de la détermination d'un état de la boîte de vitesses, cet état pouvant notamment être le point mort, le fait qu'une vitesse est engagée ou encore un état transitoire. Le document EP 1 350 991 A1 divulgue toutes les caractéristiques du préambule de la revendication 1.

Dans le cas des véhicules fonctionnant en mode « Stop and Start » connu également sous l'acronyme STT, la détermination précise de l'état de point mort de la boîte de vitesses est essentielle.

Selon ce mode STT, lorsque le véhicule s'arrête, par exemple à un feu rouge, son moteur s'arrête automatiquement. Lorsque le conducteur actionne à nouveau la pédale d'accélérateur, ou relâche la pédale de frein, après passage du feu au vert, le moteur est automatiquement remis en route pour permettre le redémarrage du véhicule.

Avant la remise en route automatique du moteur, il importe de déterminer avec certitude si la boîte de vitesses est au point mort ou non. En effet, la remise en marche du moteur alors qu'une vitesse est engagée se traduit par un redémarrage brutal du véhicule voire un calage du moteur.

Ainsi, une incertitude quant à l'état de la boîte de vitesses a des conséquences importantes, puisqu'elle peut se traduire par un déplacement du véhicule non souhaité par l'utilisateur, et donc par une perte de contrôle du véhicule.

D'autre part, compte tenu des dispersions dimensionnelles importantes des systèmes de commande de boîte de vitesses connus, la détermination de l'état de la boîte de vitesses reste difficile à établir avec certitude.

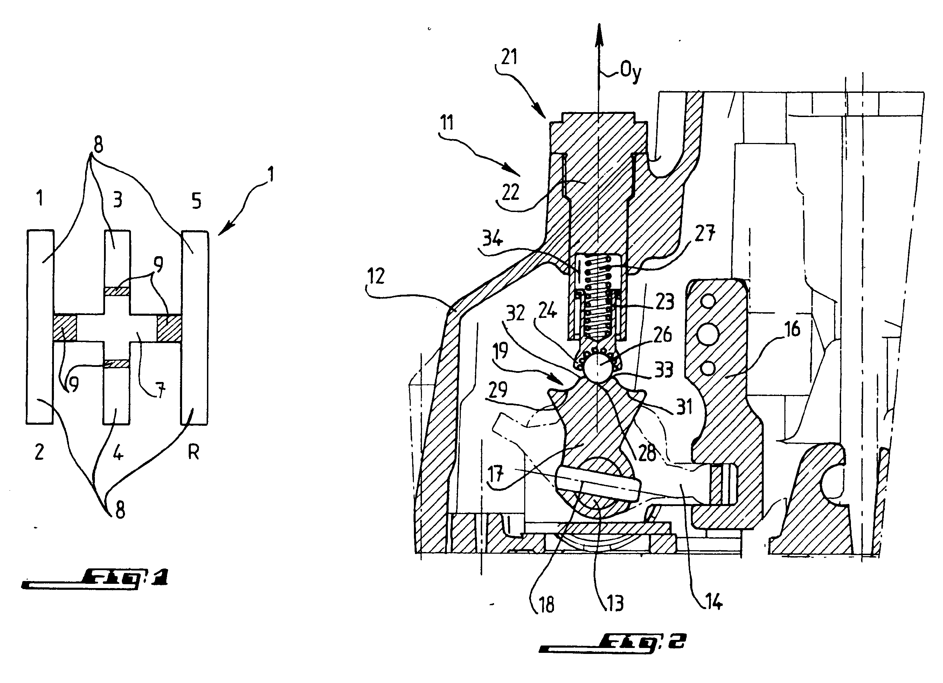

Pour illustrer ces dispersions dimensionnelles, on a représenté dans la figure 1 une grille de commande correspondant par exemple au guidage d'un levier de changement de vitesses d'une boîte de vitesses à commande manuelle à cinq rapports repérés par 1 à 5 et une marche arrière repérée par R.

Cette grille de commande comprend une zone centrale, repérée par 7, et pour laquelle la détection du levier de vitesses dans cette zone centrale correspond de façon certaine à un état de point mort de la boîte de vitesses. Lorsque le levier occupe une position située dans une zone périphérique repérée par 8, la boîte de vitesses est de façon certaine dans un état de vitesse engagée.

Mais dans le cas où le levier est dans une zone intermédiaire 9, située entre la zone centrale et la zone périphérique, alors, il n'est pas possible de conclure si un rapport est engagé ou non, ou si la boîte de vitesses est simplement dans un état transitoire, c'est-à-dire durant lequel un rapport est en train d'être enclenché.

Le but de l'invention est de remédier à cet inconvénient en proposant un procédé permettant d'identifier l'état de point mort de façon simple et précise.

A cet effet, l'invention a pour objet un procédé de détermination de l'état d'une boîte de vitesses de véhicule, notamment automobile, depuis une unité de gestion, dans lequel on utilise un indexeur à bille pourvu d'un capteur de la position de la bille couplé à l'unité de gestion, cette bille étant maintenue par un ressort en appui sur une came liée à un arbre de commande, cette came comprenant un siège d'indexation au point mort dans lequel la bille s'engage lorsque la came occupe une position angulaire correspondant au point mort, et dans lequel l'état de point mort est détecté par l'unité de gestion sur identification du fait que la bille occupe une position correspondant à son engagement dans le siège d'indexation au point mort tout en étant immobile.

L'invention concerne également un procédé tel que défini ci-dessus, dans lequel la détermination de l'immobilité de la bille est effectuée dans l'unité de gestion en comparant les signaux issus du capteur de position à deux instants consécutifs.

L'invention concerne également un procédé tel que défini ci-dessus, dans lequel l'état de vitesse engagée est détecté par l'unité de gestion sur identification du fait que la bille occupe une position correspondant à son engagement dans un siège ayant une profondeur différant de la profondeur du siège d'indexation au point mort tout en étant immobile.

L'invention concerne également un procédé tel que défini ci-dessus, dans lequel un état transitoire de la boîte de vitesses est identifié lorsque la bille est non immobile.

L'invention concerne également un procédé tel que défini ci-dessus, dans lequel on utilise un indexeur à bille d'un arbre de commande de la boîte de vitesses situé dans le carter de la boîte de vitesses.

L'invention concerne également un procédé tel que défini ci-dessus, dans lequel on utilise un indexeur situé entre un organe de commande de la boîte de vitesses et la boîte de vitesses, tel qu'un levier de changement de rapport, et le carter de boîte de vitesses.

L'invention sera maintenant décrite plus en détail, et en référence aux figures annexées.

La figure 1 est une représentation schématique d'une grille de guidage d'un levier de commande d'une boîte de vitesses montrant notamment les zones d'incertitude de l'état de la boîte de vitesses ;

La figure 2 est une représentation schématique d'une boîte de vitesses comprenant une came rotative coopérant avec un indexeur à bille et dans laquelle est mis en oeuvre le procédé selon l'invention ;

La figure 3 est une représentation schématique de la trajectoire de la bille de l'indexeur de la figure 2 par rapport à la surface de la came ;

La figure 4 est un organigramme représentatif du procédé selon l'invention.

Dans la figure 2, on a représenté schématiquement une boîte de vitesses 11 en coupe, comprenant un carter 12 entourant différents éléments mobiles ; ces éléments comprenant un arbre de commande 13 rigidement et un doigt de changement de rapport 14 rigidement solidaire de cet arbre.

Le doigt 14 a son extrémité engagée dans une échancrure correspondante d'un actionneur 16 mobile en translation pour provoquer l'engagement ou le désengagement d'un rapport sur déplacement de ce doigt. Sur rotation de l'arbre de commande 13, le déplacement de l'actionneur 16 provoque le crabotage ou le décrabotage d'un synchroniseur non représenté.

L'arbre de commande 13 porte également une came 17, rigidement liée à cet arbre 13 par une clavette (goupille ?)18 traversant l'arbre et la came. Cette came comprend une surface de guidage repérée par 19, dédiée à l'indexation de la position angulaire de l'arbre 13.

Cette boîte de vitesses comprend également un indexeur à billes 21, incluant un fourreau 22 rigidement fixé au carter, et un coulisseau 23 monté mobile en translation dans ce fourreau. Le coulisseau 23 présente une extrémité externe 24 dépassant du fourreau 22 et portant une bille d'indexation 26, un ressort de compression 27 étant interposé entre le fond du fourreau 22 et le coulisseau 23.

Le coulisseau 23, et donc la bille 26 qu'il porte, sont mobiles en translation selon un axe repéré par Oy qui intercepte l'axe de l'arbre 13 tout en étant perpendiculaire à celui-ci. L'indexeur 21 est situé de manière à maintenir la bille 26 en appui sur la surface 19 de la came grâce au ressort 27.

La surface 19 de la came 17 comprend un siège 28 d'indexation au point mort. Dans la figure 2 qui correspond à un cas où l'arbre 13 occupe une position angulaire correspondant au point mort, la bille 26 est engagée dans ce siège 28 d'indexation au point mort.

Cette surface 19 comprend également deux autres sièges, repérés par 29 et 31, et situés de part et d'autre du siège 28 d'indexation au point mort. Lorsque l'arbre 13 occupe une position angulaire telle que la bille 26 est engagée dans le siège 29 ou 31, cela correspond à une situation dans laquelle un rapport de la boîte de vitesses est engagé.

Les trois sièges 28, 29 et 31 qui sont représentés en coupe, ont par exemple des formes de calottes hémisphériques et, comme visible sur la figure 2, le siège 28 correspondant à l'indexation au point mort est moins profond que les deux autres sièges 29 et 31.

En conséquence, la position de la bille 26 diffère selon qu'un rapport est engagé ou que la boîte de vitesses est au point mort, cette bille étant plus fortement sortie du fourreau 22 lorsqu'un rapport est engagé que lorsque la boîte de vitesses est au point mort.

Dans la surface 19, une première bordure 32 en relief sépare le siège 28 du siège 29, et une seconde bordure 33 en relief sépare le siège 28 du siège 31. Lors du passage du point mort à l'engagement d'un rapport ou inversement, la bille 26 parcourt la surface 19 en passant par une situation dans laquelle elle est en appui soit sur la bordure 32 soit sur la bordure 33 selon le mouvement correspondant de l'arbre 13.

L'indexeur 21 est équipé d'un capteur de position 34 délivrant un signal représentatif de la position du coulisseau 23 par rapport au fourreau 22, c'est-à-dire représentatif de la position de la bille 26.

Ce capteur 34 délivre par exemple un signal proportionnel à la position de la bille le long l'axe Oy, ce signal ayant par exemple une valeur d'autant plus importante que la bille 26 est rentrée dans le fourreau. Ce signal a par conséquent une valeur d'autant plus faible que la bille est engagée dans un siège profond.

Ce capteur 34 est relié à une unité de gestion de la boîte de vitesses dans laquelle est effectuée la détection de l'état de cette boîte de vitesses.

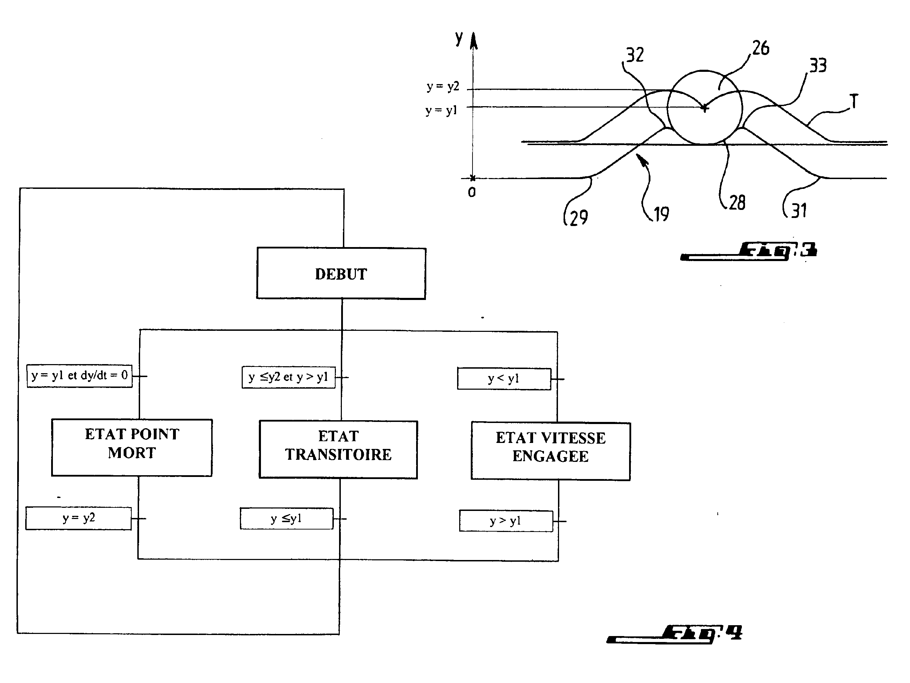

Dans la figure 3, on a représenté, dans une vue développée, la surface 19 et la bille 26 ainsi que la trajectoire T du centre de la bille par rapport à la surface 19 lorsque l'arbre 13 est déplacé en rotation.

Lorsque la bille est engagée dans le siège 28 d'indexation au point mort, c'est-à-dire lorsque la boîte de vitesses est au point mort, le centre de la bille 26 est à une position y valant y1 le long de l'axe Oy, et correspondant à un signal issu du capteur 34 ayant une valeur médiane.

Le centre de la bille 28 occupe une position maximale le long de l'axe Oy, notée y=y2 lorsque cette bille est en appui sur la bordure 32 ou 33, ce qui correspond à un signal issu du capteur 34 ayant une valeur basse. Ceci se produit en particulier lorsque l'arbre 13 est manoeuvré pour passer du point mort à l'engagement d'un rapport ou inversement.

Lorsque la bille 26 est engagée dans l'un des sièges 29 ou 31 correspondant à l'engagement d'un rapport, ces sièges ayant une profondeur supérieure à celle du sièges 28, alors la position y de la bille est la plus basse le long de l'axe Oy. Cette position est inférieure à la valeur y1, et elle correspond à un signal du capteur 34 ayant une valeur haute.

Avantageusement, l'unité de gestion comprend des moyens de calcul et de mémorisation, de telle manière que les valeurs de position y1 et y2 peuvent être mémorisées dans une phase d'apprentissage, ce qui permet encore d'améliorer sa précision en s'affranchissant des dispersions de fabrication au niveau de la came et de l'indexeur.

L'unité de gestion identifie les états de la boîte de vitesses conformément à l'algorithme représenté par le organigramme de la figure 4, en prenant en compte conjointement l'aspect statique et l'aspect dynamique de la position de la bille 26.

Comme visible dans la figure 3, en fonctionnement, il existe trois situations pour lesquelles la bille 26 occupe une position y=y1: une situation stable, lorsqu'elle est engagée dans le siège 28 ; et une situation instable qui correspond à une phase intermédiaire lorsqu'elle passe du siège 28 au siège 29 ou bien du siège 28 au siège 31.

Lorsque la bille occupe une position y=y1, alors qu'elle est dans une phase intermédiaire de passage d'un siège à un autre, de sorte que l'arbre 13 n'occupe alors pas une position angulaire de point mort, cette situation peut aisément être identifiée par le fait que la vitesse dy/dt de cette bille 26 est alors non nulle.

Ainsi, partant du bloc DEBUT de la figure 4, l'identification de l'état de la boîte de vitesses consiste à déterminer, à partir des informations issues du capteur si les conditions y=y1 et dy/dt=0 (i) sont remplies pour identifier un état de point mort. Lorsque la boîte de vitesses est identifiée comme étant au point mort, l'unité de gestion surveille la valeur y pour retourner au bloc DEBUT dès que la condition y=y2 est remplie par y.

Dans le cas où les conditions y=y1 et dy/dt=0 ne sont pas remplies, l'unité de commande vérifie si la condition y1<y≤y2 (ii) est remplie pour identifier dans ce cas un état transitoire de la boîte de vitesses. Si tel est le cas, l'unité de gestion surveille la valeur de y issue du capteur pour retourner au bloc DEBUT dès que cette valeur devient inférieure à y1.

Enfin, dans le cas où les conditions (i) et (ii) ne sont pas remplies, l'unité de gestion détermine si la condition y<y1 est vraie pour identifier alors un état vitesse engagée pour la boîte de vitesses. Si tel est le cas, elle surveille ensuite la valeur y pour retourner au bloc DEBUT dès que la condition y>y1 est vérifiée par y.

Cet algorithme permet d'identifier précisément les phases transitoires grâce à la prise en compte en combinaison, de la position y de la bille 26 et de sa vitesses dy/dt à l'instant où est effectuée l'évaluation de l'état.

En ce qui concerne l'évaluation la vitesse dy/dt de la bille 26, elle peut être effectuée dans l'unité de gestion en comparant les positions de la bille 26 à deux instants consécutifs, pour conclure que la vitesse dy/dt est nulle si ces positions sont identiques, et non nulle sinon.

Dans l'exemple illustré sur les figures, l'indexeur à bille est celui de l'arbre de commande 13 qui est situé dans la boîte de vitesses, ce qui permet de diminuer les conséquences des dispersions de fabrication sur l'évaluation.

En effet, cet arbre 13 est cinématiquement très proche des synchroniseurs, de sorte que sa position angulaire reflète fidèlement l'état craboté, transitoire, ou non craboté de ceux-ci. Ainsi, seules les dispersions de la surface 19 de la came rotative sont susceptibles de jouer sur la précision de l'évaluation.

Mais l'invention peut aussi consister à utiliser un autre billage non nécessairement situé dans la boîte de vitesses, mais relativement proche de celle-ci de manière à être influencé le moins possible par les dispersions de fabrication de la chaîne cinématique de commande de la boîte de vitesses. Ceci permet en particulier d'implémenter à moindre coût le procédé selon l'invention dans un dispositif de commande existant, sans qu'il soit nécessaire de lui apporter des modifications significatives.

## Revendications

1. Procédé de détermination de l'état d'une boîte de vitesses de véhicule, notamment automobile, depuis une unité de gestion, dans lequel on utilise un indexeur à bille (21) pourvu d'un capteur (34) de la position de la bille (26) couplé à l'unité de gestion, cette bille (26) étant maintenue par un ressort (27) en appui sur une came (17) liée à un arbre de commande (13), cette came (17) comprenant un siège (28) d'indexation au point mort dans lequel la bille (26) s'engage lorsque la came (27) occupe une position angulaire correspondant au point mort, **caractérisé en ce que** dans le procédé l'état de point mort est détecté par l'unité de gestion sur identification du fait que la bille (26) occupe une position (y1) correspondant à son engagement dans le siège (28) d'indexation au point mort tout en étant immobile.

2. Procédé selon la revendication 1, dans lequel la détermination de l'immobilité de la bille (26) est effectuée en comparant depuis l'unité de gestion les signaux issus du capteur (34) de position à deux instants consécutifs.

3. Procédé selon l'une des revendications 1 à 2, dans lequel l'état de vitesse engagée est détecté par l'unité de gestion sur identification du fait que la bille (26) occupe une position correspondant à son engagement dans un siège (29, 31) ayant une profondeur différant de la profondeur du siège (28) d'indexation au point mort tout en étant immobile.

4. Procédé selon l'une des revendications 1 à 3, dans lequel un état transitoire de la boîte de vitesses est identifié lorsque la bille (26) est non immobile.

5. Procédé selon la revendication 1 ou 4, dans lequel on utilise un indexeur à bille (22) d'un arbre de commande (13) de la boîte de vitesses situé dans le carter (22) de la boîte de vitesses.

6. Procédé selon l'une des revendications 1 à 5, dans lequel on utilise un indexeur situé entre un organe de commande de la boîte de vitesses, tel qu'un levier de changement de rapport, et le carter de boîte de vitesses.

## Claims

1. Method for determining the state of a gearbox of a vehicle, particularly a motor vehicle, from a management unit, in which a ball indexer (21) is used provided with a sensor (34), for sensing the position of the ball (26), the said ball being coupled to the management unit, this ball (26) being held by a spring (27) pressing on a cam (17) linked to a control shaft (13), this cam (17) comprising a neutral position indexation seat (28) in which the ball (26) is engaged when the cam (27) occupies an angular position in the neutral position, **characterized in that,** in the method, the neutral position state is detected by the management unit on identification of the fact that the ball (26) occupies a position (y1) corresponding to its engagement in the neutral position indexation seat (28) while being immobile.

2. Method according to Claim 1, in which the immobility of the ball (26) is determined by comparing, from the management unit, the signals originating from the position sensor (34) at two consecutive moments.

3. Method according to one of Claims 1 or 2, in which the engaged gear state is detected by the management unit on identification of the fact that the ball (26) occupies a position corresponding to its engagement in a seat (29, 31) having a depth that is different from the depth of the neutral position indexation seat (28) while being immobile.

4. Method according to one of Claims 1 to 3, in which a transitional state of the gearbox is identified when the ball (26) is not immobile.

5. Method according to Claim 1 or 4, in which use is made of a ball indexer (22) of a control shaft (13) of the gearbox situated in the casing (22) of the gearbox.

6. Method according to one of Claims 1 to 5, in which use is made of an indexer situated between a member for controlling the gearbox such as a gear-change lever and the gearbox casing.

## Patentansprüche

1. Verfahren zur Bestimmung des Zustands eines Schaltgetriebes eines Fahrzeugs, insbesondere eines Kraftfahrzeugs, ausgehend von einer Verwaltungseinheit, bei dem ein Kugel-Indexierer (21) verwendet wird, der mit einem mit der Verwaltungseinheit gekoppelten Positionssensor (34) der Kugel (26) versehen ist, wobei diese Kugel (26) von einer Feder (27) in Auflage auf einer Nocke (17) gehalten wird, die mit einer Antriebswelle (13) verbunden ist, wobei diese Nocke (17) einen Indexierungssitz (28) am Totpunkt aufweist, in den die Kugel (26) eingreift, wenn die Nocke (27) eine dem Totpunkt entsprechende Winkelstellung einnimmt, **dadurch gekennzeichnet, dass** im Verfahren der Totpunktzustand durch die Verwaltungseinheit bei Feststellung der Tatsache erfasst wird, dass die Kugel (26) eine Stellung (y1) einnimmt, die ihrem Eingriff in den Indexierungssitz (28) am Totpunkt entspricht, während sie gleichzeitig unbeweglich ist.

2. Verfahren nach Anspruch 1, bei dem die Bestimmung der Unbeweglichkeit der Kugel (26) durchgeführt wird, indem ausgehend von der Verwaltungseinheit die vom Positionssensor (34) stammenden Signale in zwei aufeinanderfolgenden Zeitpunkten verglichen werden.

3. Verfahren nach einem der Ansprüche 1 bis 2, bei dem der Zustand eines eingelegten Gangs von der Verwaltungseinheit bei Feststellung der Tatsache erfasst wird, dass die Kugel (26) eine Stellung entsprechend ihrem Eingriff in einen Sitz (29, 31) einnimmt, der eine andere Tiefe als der Indexierungssitz (28) am Totpunkt hat, während sie gleichzeitig unbeweglich ist.

4. Verfahren nach einem der Ansprüche 1 bis 3, bei dem ein Übergangszustand des Schaltgetriebes festgestellt wird, wenn die Kugel (26) nicht unbeweglich ist.

5. Verfahren nach einem der Ansprüche 1 oder 4, bei dem ein Kugel-Indexierer (21) einer Antriebswelle (13) des Schaltgetriebes verwendet wird, der sich im Gehäuse (22) des Schaltgetriebes befindet.

6. Verfahren nach einem der Ansprüche 1 bis 5, bei dem ein Indexierer verwendet wird, der sich zwischen einem Steuerorgan des Schaltgetriebes, wie einem Gangschalthebel, und dem Gehäuse des Schaltgetriebes befindet.
